**Europäisches Patentamt**

**European Patent Office**

**Office européen des brevets**

(19)

(11) Veröffentlichungsnummer: **0 087 092**
**B1**

(12)

# EUROPÄISCHE PATENTSCHRIFT

(45) Veröffentlichungstag der Patentschrift:
05.12.84

(21) Anmeldenummer: 83101366.9

(22) Anmeldetag: 12.02.83

(51) Int. Cl.³: **C 02 F  3/12**, C 02 F  3/30,
**C 02 F  1/58**

(54) Verfahren und Vorrichtung zur biologischen Reinigung von phosphathaltigem Abwasser.

(30) Priorität: 23.02.82  DE 3206438
23.02.82  DE 3206441

(43) Veröffentlichungstag der Anmeldung:
31.08.83 Patentblatt 83/35

(45) Bekanntmachung des Hinweises auf die Patenterteilung:
05.12.84 Patentblatt 84/49

(84) Benannte Vertragsstaaten:
AT CH DE FR LI NL SE

(56) Entgegenhaltungen:
US - A - 4 173 531
US - A - 4 183 808

(73) Patentinhaber: **Linde Aktiengesellschaft,
Abraham-Lincoln-Strasse 21, D-6200 Wiesbaden (DE)**

(72) Erfinder: **Reimann, Hans, Dr. rer. nat.,
Rudolf-Wilke-Weg 21, D-8000 München 71 (DE)**

(74) Vertreter: **Schaefer, Gerhard, Dr., Linde
Aktiengesellschaft Zentrale Patentabteilung,
D-8023 Höllriegelskreuth (DE)**

## Beschreibung

Die Erfindung betrifft ein Verfahren zur biologischen Reinigung von phosphathaltigem Abwasser, bei dem das zulaufende Abwasser in einem Belebungsbecken in Gegenwart von belebtem Schlamm zum Abbau organischer Kohlenwasserstoffverbindungen und zur Aufnahme von Phosphat durch in Belebtschlamm vorhandene Mikroorganismen aerob behandelt wird, das Abwasser/Belebtschlamm-Gemisch aus dem Belebungsbecken abgezogen und in einer Nachklärung zu gereinigtem, im wesentlichen phosphatfreiem Wasser und phosphathaltigem Schlamm aufgeteilt wird, der wenigstens teilweise als Rücklaufschlamm in das Belebungsbecken zurückgeleitet wird, sowie eine Vorrichtung zur Durchführung des Verfahrens.

Ein derartiges Verfahren zum Abtrennen von Phosphaten aus Abwasser wird beispielsweise in der US-A Nr. 4141822 beschrieben. Dabei wird bei diesem bekannten Verfahren der mit Phosphat angereicherte Schlamm einer Phosphatabtrennung zugeleitet und zum Absetzen gebracht. Mindestens ein Teil des abgesetzten Schlammes wird unter anaeroben Bedingungen für eine Zeitdauer gehalten, die ausreicht, um Phosphat in die flüssige Phase des abgesetzten Schlammes freizusetzen, die dann in die überstehende Flüssigkeit aufsteigt und eine mit Phosphat angereicherte Flüssigkeit bildet. Mindestens ein Teil des abgesetzten und eingedickten phosphatarmen Schlammes wird von einem unteren Abschnitt der Phosphatabtrennzone als belebter Schlamm in das Belebungs- bzw. Begasungsbecken zurückgeleitet. Um das in die flüssige Phase des anaeroben Schlammes freigesetzte Phosphat beschleunigt in die überstehende Flüssigkeit zu führen, wird der anaerobe Schlamm mit einem wässerigen Medium, das einen geringeren Phosphatgehalt hat als der anaerobe Schlamm, in Kontakt gebracht.

Dieses Verfahren hat jedoch den Nachteil, dass der gesamte Belebtschlamm durch Nachklärung vom Ablauf getrennt und dann der abgetrennte Schlamm ganz oder bevorzugt ein Teilstrom davon der anaeroben Phosphatabtrennung unterworfen wird und dass somit die Nachkläreinrichtung durch diesen anaerob zu behandelnden Teilstrom, insbesondere hinsichtlich der hydraulischen Beschickung und der Schlammvolumenbelastung, mitbelastet wird. Zudem muss bei dem bekannten Verfahren die Phosphatabtrennzone für lange Aufenthaltszeiten bemessen sein, damit der Schlamm noch genügend eindicken kann, was sich in erheblichen Investitionskosten bemerkbar macht. Aufgabe der vorliegenden Erfindung ist es daher, die aufgezeigten Mängel zu beseitigen und damit die Phosphatabtrennung wirtschaftlich günstiger auszugestalten.

Diese Aufgabe wird erfindungsgemäss dadurch gelöst, dass ein Teilstrom des aus dem Belebungsbecken ablaufenden Abwasser/Belebtschlamm-Gemisches abgezweigt und einer Phosphatabtrennung unterworfen und dass der dabei anfallende phosphatarme Schlamm mindestens teilweise in das Belebungsbecken zurückgeführt und die mit Phosphat angereicherte Flüssigkeit weiterbehandelt wird.

Aus dem Abwasser wird demnach allein durch Phosphatabtrennung aus einem Teilstrom des Abwasser/Belebtschlamm-Gemisches das vorhandene Phosphat im wesentlichen eliminiert. Diese Verfahrensweise bietet den Vorteil, dass die Nachkläreinrichtung verkleinert ausgebildet werden kann, dadurch dass nicht mehr der gesamte Belebungsbeckenablauf nachgeklärt werden muss. Damit verbunden sind auch Energieeinsparungen, wie beispielsweise für die Beschickung. Darüber hinaus kann aber auch eine kleinere Phosphatabtrenneinrichtung verwendet werden, da der Übergang von Phosphat aus dem Schlamm in das grössere Volumen der Wasserphase sowie auch die Trennung der Wasserphase vom Schlamm schneller vor sich gehen, als dies bei dem schon stark eingedickten Bodenschlamm des Nachklärbeckens der Fall wäre.

Gemäss einer bevorzugten Ausführungsform des erfindungsgemässen Verfahrens ist vorgesehen, dass der Teilstrom zur Phosphatabtrennung anaerob behandelt und die mit Phosphat angereicherte Flüssigkeit einer Phosphatfällung zugeführt und anschliessend vorteilhaft in das Belebungsbecken zurückgeführt wird.

In Weiterbildung des Erfindungsgedankens wird ausserdem vorgeschlagen, den Teilstrom vor der Phosphatabtrennung einer Durchmischung in einem anaeroben Verweilbehälter zu unterwerfen. Da das Durchmischen ohne Luft- bzw. Sauerstoffzufuhr erfolgt, wird erreicht, dass das von den Mikroorganismen in deren Zellen eingebaute Phosphat in Lösung geht und die auf diese Weise mit Phosphat angereicherte Flüssigkeit in der nachfolgenden Schlammabtrennung vom Schlamm getrennt wird. Dadurch wird eine noch weitgehendere Phosphatentfernung erzielt.

Hierbei ist weiterhin vorgesehen, dass ein Teil des bei der Phosphatabtrennung anfallenden phosphatarmen Schlammes dem Teilstrom aus dem Belebungsbeckenablauf zugeführt und mit diesem vor der Phosphatabtrennung vermischt wird. So wird der bereits anaerob eingearbeitete Schlamm zusammen mit dem Teilstrom des Belebungsbeckenablaufs gemischt, wodurch ein verbessertes Freisetzen von Phosphat aus den Zellen der Mikroorganismen gewährleistet wird.

Gemäss einer weiteren Ausführungsform des erfindungsgemässen Verfahrens ist vorgesehen, dass die aerobe Behandlung im Belebungsbecken in mindestens zwei Behandlungszonen durchgeführt wird, dass ein Teilstrom des zulaufenden Abwassers mindestens einer weiteren Behandlungszone zugeführt wird, dass der Rücklaufschlamm vorzugsweise der ersten Behandlungszone zugeführt wird, dass die aerobe Behandlung von Abwasser und Rücklaufschlamm in der ersten Behandlungszone für eine Zeitdauer durchgeführt wird, die ausreicht, dass die Hauptmenge des im Abwasser vorhandenen Phosphats von den Mikroorganismen aufgenommen wird, dass ein Teilstrom des Abwasser/Belebtschlamm-Gemisches aus der ersten Behandlungszone der zweiten Behandlungszone zugeführt und ein weiterer Teilstrom einer Phosphatabtrennung unterworfen wird, dass der bei der Phosphatabtrennung anfallende phosphatarme Schlamm zumindest teilweise der ersten Behandlungszone zugeführt und die anfallende, mit Phosphat angereicherte Flüssigkeit weiterbehandelt wird.

Diese Verfahrensvariante ist so ausgelegt, dass in der ersten Behandlungszone der grösste Teil des im zulaufenden Abwasser vorhandenen Phosphates von den Mikroorganismen aufgenommen wird, ohne dass dabei auf einen ausreichenden Abbau der Kohlenwasserstoffverbindungen Wert gelegt wird. Dieser Abbau erfolgt erfindungsgemäss in den weiteren Behandlungszonen, in denen in Gegenwart eines Teilstromes des in der ersten Behandlungszone behandelten Abwasser/Belebtschlamm-Gemisches auch das Phosphat aus dem zulaufenden Teilstrom des Abwassers eliminiert und im Rücklaufschlamm gebunden wird. Ein weiterer Teilstrom des Abwasser/Belebtschlamm-Gemisches aus der Behandlungszone wird einer Phosphatabtrennung unterworfen. Da dabei nur ein Teilstrom behandelt wird, kann die Phosphatabtrenneinrichtung kleiner ausgebildet werden; auch sind die Verweilzeiten kürzer, da der weniger konzentrierte Schlamm das gebundene Phosphat schneller an die Flüssigkeit abgibt und in der Abtrennzone schneller eindickt. Dadurch erfolgt insgesamt eine weitgehendere Phosphateliminierung in überdies wesentlich kürzerer Zeit und mit höherem Eindickgrad.

Die Erfindung betrifft überdies eine Vorrichtung zur Durchführung des erfindungsgemässen Verfahrens mit einem Belebungsbecken und einer diesem über einen Ablauf nachgeschalteten Nachkläreinrichtung mit Schlammrücklaufleitung zum Belebungsbecken, die dadurch gekennzeichnet ist, dass an den Ablauf des Belebungsbeckens über eine Zweigleitung eine Phosphatabtrenneinrichtung mit Schlammrücklauf zum Belebungsbecken und Ablauf für die mit Phosphat angereicherte Flüssigkeit angeschlossen ist.

Dabei ist bevorzugt in dem Ablauf für die mit Phosphat angereicherte Flüssigkeit eine Einrichtung zur Phosphatfällung vorgesehen, deren Ablauf mit dem Belebungsbecken verbunden sein kann. Nach einer bevorzugten Ausgestaltungsform ist weiterhin der Phosphatabtrenneinrichtung ein Rührreaktor vorgeschaltet. Vorteilhaft ist dabei der Rührreaktor über eine Zweigleitung mit dem Schlammrücklauf aus der Phosphatabtrenneinrichtung zum Belebungsbecken verbunden.

Gemäss einer weiteren Ausgestaltungsform ist vorgesehen, dass das Belebungsbecken in mindestens zwei aerobe Behandlungszonen unterteilt ist, dass der Zulauf zur ersten Behandlungszone eine Zweigleitung zu mindestens einer weiteren Behandlungszone aufweist, dass die Schlammrückleitung mit der ersten Behandlungszone verbunden ist, dass der ersten Behandlungszone über einen Ablauf eine Phosphatabtrenneinrichtung nachgeschaltet ist, dass an die Phosphatabtrenneinrichtung ein Ablauf für die mit Phosphat angereicherte Flüssigkeit und ein Schlammablauf angeschlossen sind und dass der Schlammablauf mit der ersten Behandlungszone verbunden ist. Bei bestimmten Bauformen von Belegungsbecken müssen die zwei aeroben Behandlungszonen nicht durch eine Trennwand getrennt sein.

Das erfindungsgemässe Verfahren sowie die dazugehörige Vorrichtung können bei allen Abwasserreinigungsanlagen zur Phosphatabtrennung eingesetzt werden.

Im folgenden sein die Erfindung anhand von zwei in den Figuren schematisch dargestellten Ausführungsbeispielen näher erläutert. Es zeigen:

Fig. 1 eine Ausführungsform mit einer aeroben Behandlungszone, und

Fig. 2 eine Ausführungsform mit einem Belebungsbecken mit zwei Behandlungszonen.

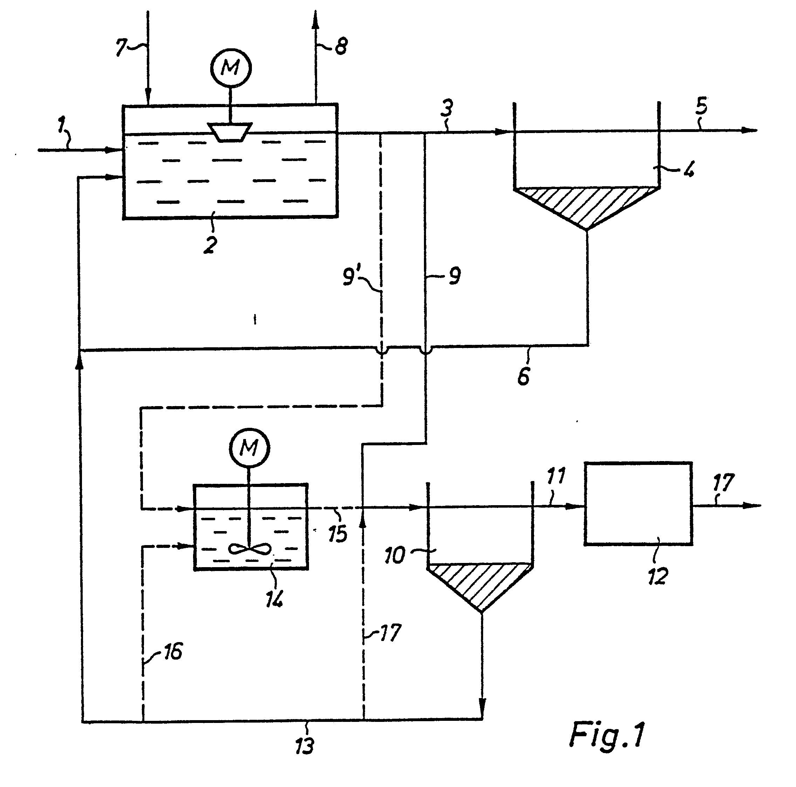

Die dargestellte Abwasserreinigungsanlage nach Fig. 1 besteht im wesentlichen aus einem Zulauf 1 für zu reinigendes Abwasser, einem Belebungsbecken 2 mit Ablauf 3 zu einem nachgeschalteten Nachklärbecken 4, an das ein Ablauf 5 für gereinigtes Abwasser und eines Schlammrücklaufleitung 6 zum Belebungsbecken angeschlossen sind. In der gezeigten Darstellung ist das Belebungsbecken 2 gegenüber der Atmosphäre abgedeckt. Bei Verwendung von Luft zur Begasung kann das Belebungsbecken jedoch auch offen ausgebildet sein. Im vorliegenden Beispiel wird reiner Sauerstoff zur Begasung verwendet, der über Leitung 7 zugeführt und in bekannter Weise, beispielsweise über nahe dem Beckenboden angeordnete Gasverteiler oder über Oberflächenbelüfter, eingetragen wird. Abgas kann über eine Leitung 8 abgeblasen werden.

Das zu reinigende phosphathaltige Abwasser gelangt über den Zulauf 1 in das Belegungsbecken und wird dort mit Rücklaufschlamm aus Leitung 6 und eingetragenem Sauerstoff vermischt, so dass die im Belebtschlamm vorhandenen Mikroorganismen die organischen Kohlenwasserstoffverbindungen im wesentlichen abbauen und überdies im Abwasser vorhandenes Phosphat aufnehmen. Das Abwasser/Belebtschlamm-Gemisch wird über den Ablauf 3 aus dem Belebungsbecken abgezogen und einem Nachklärbecken 4 zugeleitet, aus dem das gereinigte, im wesentlichen phosphatfreie Wasser über Leitung 5 abgeleitet wird. Der abgesetzte phosphathaltige Schlamm wird über die Schlammrücklaufleitung 6 wieder in das Belebungsbecken 2 zurückgeführt.

Erfindungsgemäss ist vorgesehen, einen Teilstrom des aus dem Belebungsbecken 2 ablaufenden Abwasser/Belebtschlamm-Gemisches über eine Leitung 9 abzuziehen und einer Phosphatabtrenneinrichtung 10 zuzuführen. In dieser Phosphatabtrenneinrichtung 10 wird in bekannter Weise unter anaeroben Bedingungen das Abwasser/Belebtschlamm-Gemisch behandelt und die dabei anfallende, mit Phosphat angereicherte Flüssigkeit über Leitung 11 abgezogen und weiterbehandelt, beispielsweise in einer Einrichtung 12 zur Phosphatfällung, und gegebenenfalls in das Belebungsbecken 2 über eine nach Bedarf vorgeschaltete Vorklärung rückgeführt 17, während der phosphatarme Schlamm über Leitung 13 in das Belebungsbecken 2 zurückgeführt wird.

Nach der Erfindung ist weiterhin die Möglichkeit (gestrichelt in der Figur dargestellt) vorgesehen, die anaerobe Phosphatabtrennzone zweistufig auszubilden. Dazu wird ein Teil des Abwasser/Belebtschlamm-Gemisches über Leitung 9 einem Rührreaktor 14 zugeführt und dort ohne Luftzufuhr durchmischt. Dadurch wird das in den Zellen der Mikroorganismen eingelagerte Phosphat freigesetzt und geht in die Lösung über. Das auf diese Weise durchmischte Abwasser/Belebtschlamm-Gemisch wird über Leitung 15 aus dem Rührreaktor 14 abgezogen und der, in diesem Fall als Schlammabtrennzone ausgebildeten, Phosphatabtrenneinrichtung 10 zugeführt und in der oben beschriebenen Weise weiterbehandelt.

Bei der zweistufigen Nordnung (Rührreaktor und Schlammabtrennzone) kann überdies nach der Erfindung anaerob eingearbeiteter Schlamm aus der Phosphatabtrenneinrichtung 10 von Leitung 13 abgezweigt und über Leitung 16 in den Rührreaktor 14 rückgeführt und mit dem Abwasser/Belebtschlamm-Gemisch vermischt werden.

Ist ein Rührreaktor nicht vorgesehen, so kann anaerob eingearbeiteter Schlamm in den Zulauf zur Phosphatabtrenneinrichtung über eine Leitung 17 zurückgeführt werden.

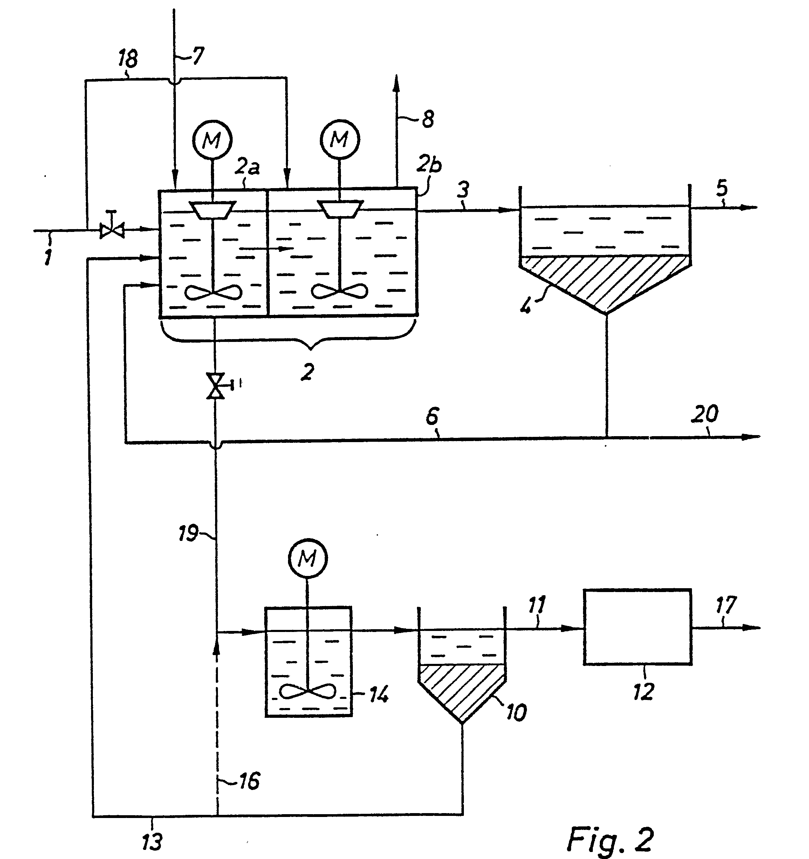

Gemäss Fig. 2 ist das Belebungsbecken in mehrere aerobe Behandlungszonen unterteilt, von denen im dargestellten Beispiel jedoch der Übersicht halber nur zwei dargestellt sind, nämlich 2a und 2b. Der Zulauf für gereinigtes Abwasser weist daher eine Zweigleitung 18 auf, die mit der zweiten Behandlungszone 2b verbunden ist. Die Schlammrückleitung 6 ist an die erste Behandlungszone 2a angeschlossen.

Das zu reinigende phosphathaltige Abwasser gelangt über den Zulauf 1 in die erste Behandlungszone 2a und wird dort mit dem Rücklaufschlamm aus Leitung 6 und eingetragenem Sauerstoff für eine Zeitdauer vermischt, die ausreicht, dass die im Schlamm vorhandenen Mikroorganismen die Hauptmenge des im Abwasser vorhandenen Phosphates aufnehmen und überdies bereits mit dem Abbau der organischen Kohlenwasserstoffverbindungen beginnen. Ein Teilstrom des derart behandelten Abwasser/Belebtschlamm-Gemisches wird der zweiten Behandlungszone 2b zugeführt und dort in Gegenwart von über Zweigleitung 18 zufliessendem Abwasser weiter vermischt, so dass die Mikroorganismen die organischen Kohlenwasserstoffverbindungen im wesentlichen abbauen und ausserdem das Phosphat, das in dem zugeführten Abwasser vorhanden ist, aufnimmt. Das Abwasser/Belebtschlamm-Gemisch wird über den Ablauf 3 aus der letzten Behandlungszone 2b und damit aus dem Belebungsbecken 2 abgezogen und dem Nachklärbecken 4 zugeleitet, aus dem das gereinigte, im wesentlichen phosphatfreie Wasser über Leitung 5 abgeleitet wird. Der abgesetzte phosphathaltige Schlamm wird mindestens teilweise über die Schlammrückleitung 6 in die erste Behandlungszone 2a des Belebungsbeckens 2 zurückgeführt und teilweise über Leitung 20 als Überschussschlamm abgezogen.

Der andere Teilstrom des Abwasser/Belebtschlamm-Gemisches aus der ersten Behandlungszone 2a wird über eine Leitung 19 einer Phosphatabtrenneinrichtung 10 zugeführt, die als Sedimentationsbecken ausgebildet sein kann und der ein Rührreaktor 14 vorgeschaltet ist. In dem Rührreaktor 14 wird unter anaeroben Bedingungen das Abwasser/Belebtschlamm-Gemisch derart vermischt, dass die Mikroorganismen das eingelagerte Phosphat in die flüssige Phase freisetzen. In der nachfolgenden Phosphatabtrenneinrichtung 10 wird diese mit Phosphat angereicherte Flüssigkeit von dem nunmehr phosphatarmen Schlamm getrennt und über einen Ablauf 11 aus der Phosphatabtrenneinrichtung 10 abgezogen, während der phosphatarme Schlamm über einen Schlammablauf 13 zumindest teilweise in die erste Behandlungszone 2a des Belebungsbeckens 2 zurückgeführt wird.

Gemäss der Erfindung besteht dabei die Möglichkeit, die mit Phosphat angereicherte Flüssigkeit aus dem Ablauf 11 in einer Einrichtung 12 zur Phosphatfällung weiterzubehandeln und über eine Leitung 17, die an die Einrichtung 12 zur Phosphatfällung angeschlossen ist, zum Belebungsbecken 2, bei Bedarf über eine Vorkläreinrichtung, zurückzuführen.

Nach einer weiteren bevorzugten Ausgestaltungsform kann ausserdem ein Teil des phosphatarmen Schlammes über eine an den Schlammablauf 13 angeschlossene Zweigleitung 16 dem Teilstrom des Abwasser/Belebtschlamm-Gemisches in Ablauf 19 zugemischt und in dem Rührreaktor 14 anaerob vermischt werden, wodurch die Mikroorganismen das eingelagerte Phosphat noch schneller freisetzen. Die letzte Verfahrensführung kann deshalb mit Vorteil bei höherem Phosphatgehalt im zu reinigenden Abwasser Anwendung finden.

## Patentansprüche

1. Verfahren zur biologischen Reinigung von phosphathaltigem Abwasser, bei dem das Abwasser in einem Belebungsbecken in Gegenwart von belebtem Schlamm zum Abbau organischer Kohlenwasserstoffverbindungen und zur Aufnahme von Phosphat durch im Belebtschlamm vorhandene Mikroorganismen begast wird, das Abwasser/Belebtschlamm-Gemisch aus dem Belebungsbecken abgezogen und in einer Nachklärung zu gereinigtem, im wesentlichen phosphatfreiem Wasser und phosphathaltigem Schlamm aufgeteilt wird, der wenigstens teilweise als Rücklaufschlamm in das Belebungsbecken zurückgeleitet wird, dadurch gekennzeichnet, dass ein Teilstrom des aus dem Belebungsbecken ablaufenden Abwasser/Belebtschlamm-Gemisches abgezweigt und einer Phosphatabtrennung unterworfen wird und dass der anbei anfallende phosphatarme Schlamm mindestens teilweise in das Belebungsbecken zurückgeführt und die mit Phosphat angereicherte Flüssigkeit weiterbehandelt wird.

2. Verfahren nach Anspruch 1, dadurch gekennzeichnet, dass der Teilstrom zur Phosphatabtrennung anaerob behandelt und die mit Phosphat angereicherte Flüssigkeit einer Phosphatfällung zugeführt wird.

3. Verfahren nach Anspruch 2, dadurch gekennzeichnet, dass die Flüssigkeit nach der Phosphatfällung in das Belebungsbecken zurückgeführt wird.

4. Verfahren nach einem der Ansprüche 1 bis 3, dadurch gekennzeichnet, dass der Teilstrom vor der Phosphatabtrennung einer Durchmischung in einem anaeroben Verweilbehälter unterworfen wird.

5. Verfahren nach einem der Ansprüche 1 bis 4, dadurch gekennzeichnet, dass ein Teil des bei der Phosphatabtrennung anfallenden phosphatarmen Schlammes dem Teilstrom aus dem Belebungsbecken zugeführt und mit diesem vor der Phosphatabtrennung vermischt wird.

6. Verfahren nach einem der Ansprüche 1 bis 5, dadurch gekennzeichnet, dass die aerobe Behandlung im Belebungsbecken in mindestens zwei Behandlungszonen durchgeführt wird, dass ein Teilstrom des zulaufenden Abwassers mindestens einer weiteren Behandlungszone zugeführt wird, dass der Rücklaufschlamm vorzugsweise der ersten Behandlungszone zugeführt wird, dass die aerobe Behandlung von Abwasser und Rücklaufschlamm in der ersten Behandlungszone für eine Zeitdauer durchgeführt wird, die ausreicht, dass die Hauptmenge des im Abwasser vorhandenen Phosphates von den Mikroorganismen aufgenommen wird, dass ein Teilstrom des Abwasser/Belebtschlamm-Gemisches aus der ersten Behandlungszone der zweiten Behandlungszone zugeführt und ein weiterer Teilstrom einer Phosphatabtrennung unterworfen wird, dass der bei der Phosphatabtrennung anfallende phosphatarme Schlamm zumindest teilweise der ersten Behandlungszone zugeführt und die anfallende, mit Phosphat angereicherte Flüssigkeit weiterbehandelt wird.

7. Vorrichtung zur Durchführung des Verfahrens nach einem der Ansprüche 1 bis 6, mit einem Belebungsbecken und einer diesem über einen Ablauf nachgeschalteten Nachkläreinrichtung mit Schlammrücklaufleitung zum Belebungsbecken, dadurch gekennzeichnet, dass an den Ablauf (3) des Belebungsbeckens (2) über eine Zweigleitung (9, 9') eine Phosphatabtrenneinrichtung (10) mit Schlammrücklauf (13) zum Belebungsbecken (2) und Ablauf (11) für die mit Phosphat angereicherte Flüssigkeit angeschlossen ist.

8. Vorrichtung nach Anspruch 7, dadurch gekennzeichnet, dass in dem Ablauf (11) für die mit Phosphat angereicherte Flüssigkeit eine Einrichtung (12) zur Phosphatfällung vorgesehen ist.

9. Vorrichtung nach einem der beiden Ansprüche 7 oder 8, dadurch gekennzeichnet, dass der Ablauf der Einrichtung (12) zur Phosphatfällung mit dem Belebungsbecken verbunden ist.

10. Vorrichtung nach einem der Ansprüche 7 bis 9, dadurch gekennzeichnet, dass der Phosphatabtrenneinrichtung (10) ein Rührreaktor (14) vorgeschaltet ist.

11. Vorrichtung nach Anspruch 10, dadurch gekennzeichnet, dass der Rührreaktor (14) über eine Zweigleitung (16) mit dem Schlammrücklauf (13) aus der Phosphatabtrenneinrichtung (10) zum Belebungsbecken (2) verbunden ist.

12. Vorrichtung nach einem der Ansprüche 7 bis 11, dadurch gekennzeichnet, dass das Belebungsbecken (2) in mindestens zwei aerobe Behandlungszonen (2a, 2b) unterteilt ist, dass der Zulauf (1) zur ersten Behandlungszone (2a) eine Zweigleitung (18) zu mindestens einer weiteren Behandlungszone (2b) aufweist, dass die Schlammrückleitung (6) mit der ersten Behandlungszone (2a) verbunden ist, dass der ersten Behandlungszone (2a) über einen Ablauf (19) eine Phosphatabtrenneinrichtung (10) nachgeschaltet ist, dass an die Phosphatabtrenneinrichtung (10) ein Ablauf (11) für die mit Phosphat angereicherte Flüssigkeit und ein Schlammablauf (13) angeschlossen sind und dass der Schlammablauf (13) mit der ersten Behandlungszone (2a) verbunden ist.

## Claims

1. Process for the biological purification of phosphate-containing sewage, in which the sewage is treated with gas in an activating tank in the presence of activated sludge in order that organic hydrocarbon compounds may be broken down and phosphate may be absorbed by micro-organisms present in the activated sludge, the sewage/activated sludge mixture is discharged from the activating tank and, in a secondary settling tank, is separated to form purified, fundamentally phosphate-free water and phosphate-containing sludge, which latter is at least partially returned to the activating tank in the form of recycled sludge, characterised in that a sub-stream of the sewage/activated sludge mixture which is discharged from the activating tank is branched off and is subjected to a phosphate-separation step, and that the low-phosphate sludge which is thereby formed is at least partially returned to the activating tank, and the liquid enriched in phosphate is subjected to further treatment.

2. A process as claimed in Claim 1, characterised in that the sub-stream which is subjected to phosphate separation is treated anaerobically, and the liquid enriched with phosphate is fed to a phosphate-precipitation unit.

3. A process as claimed in Claim 2, characterised in that, after phosphate precipitation, the liquid is returned to the activating tank.

4. A process as claimed in one of Claims 1 to 3, characterised in that, prior to phospate separation, the sub-stream is subjected to through-mixing in an anaerobic storage container.

5. A process as claimed in one of Claims 1 to 4, characterised in that a part of the low-phosphate sludge which is formed during the phosphate separation is added to the sub-stream from the activating tank and is mixed therewith prior to phosphate separation.

6. A process as claimed in one of Claims 1 to 5, characterised in that the aerobic treatment in the activating tank is carried out in at least two treatment zones; that a sub-stream of the inflowing sewage is fed to at least one further treatment zone; that the recycled sludge ist preferably fed to the first treatment zone; that the aerobic treatment of sewage and recycled sludge in the first treatment zone is carried out for a length of time which is sufficient for the majority of the phosphate present in the sewage to be absorbed by the micro-organisms; that a sub-stream of the sewage/activated sludge mixture is fed from the first treatment zone to the second treatment zone, and a further sub-stream is subjected to a phosphate-separation step; that the low-phosphate sludge which is formed during the phosphate-separation step is fed, at least in part, to the first treatment zone, and the liquid formed, which is enriched in phosphate, is subjected to further treatment.

7. Apparatus for carrying out the process as claimed in one of Claims 1 to 6, comprising an activating tank and a secondary settling device which is connected to the outlet of the activating tank and which is provided with a sludge recycle-line to the activating tank, characterised in that the outlet (3) of the activating tank (2) is connected by way of a branch line (9, 9') to a phosphate-separating device (10) which has a sludge return-line (13) to the activating tank (2) and an outlet (11) for the liquid enriched in phosphate.

8. Apparatus as claimed in Claim 7, characterised in that a device (12) for phosphate precipitation is provided in the outlet (11) for the liquid enriched in phosphate.

9. Apparatus as claimed in one of Claims 7 or 8, characterised in that the outlet of the phosphate-precipitation device (12) is connected to the activating tank.

10. Apparatus as claimed in one of Claims 7 to 9, characterised in that the phosphate-separating device (10) is preceded by an agitating reactor (14).

11. Apparatus as claimed in Claim 10, characterised in that the agitating reactor (14) is connected by way of a branch line (16) to the sludge return-line (13) which leads from the phosphate-separating device (10) to the activating tank (2).

12. Apparatus as claimed in one of Claims 7 to 11, characterised in that the activating tank (2) is divided into at least two aerobic treatment zones (2a, 2b); that the inlet (1) to the first treatment zone (2a) has a branch line (18) to at least one further treatment zone (2b); that the sludge recycle-line (6) is connected to the first treatment zone (2a); that the first treatment zone (2a) is connected through the outlet (19) to a phosphate-separating device (10); that the phosphate-separating device (10) is connected to an outlet (11) for the phosphate-enriched liquid and to a sludge outlet (13), and that the sludge outlet (13) is connected to the first treatment zone (2a).

**Revendications**

1. Procédé pour l'épuration biologique d'eaux résiduaires contenant du phosphate, dans lequel l'eau résiduaire est gazéifiée dans un bassin d'activation, en présence de boues activées, pour la décomposition de composés hydrocarburés organiques et pour la collecte des phosphates par des micro-organismes présents dans la boue activée, le mélange eau résiduaire/boue activée est extrait du bassin d'activation et, dans une postdécantation, est partagé en une eau à épurer essentiellement exempte de phosphate et en une boue contenant des phosphates qui est au moins partiellement retournée au bassin d'activation sous forme de boue recyclée, caractérisé en ce qu'un courant partiel du mélange eau résiduaire/ boue activée sortant du bassin d'activation est dérivé et soumis à une séparation de phosphates et en ce que la boue pauvre en phosphates en résultant est retournée au moins en partie au bassin d'activation, et en ce que le liquide résultant riche en phosphates est traité ultérieurement.

2. Procédé selon la revendication 1, caractérisé en ce que le courant partiel est traité de manière anaérobie pour la séparation des phosphates, et en ce que le liquide enrichi en phosphates est soumis à une précipitation des phosphates.

3. Procédé selon la revendication 2, caractérisé en ce que le liquide est ramené au bassin d'activation après la précipitation des phosphates.

4. Procédé selon l'une des revendications 1 à 3, caractérisé en ce que le courant partiel est soumis à un brassage avant la séparation des phosphates dans un bassin de séjour anaérobie.

5. Procédé selon l'une des revendications 1 à 4, caractérisé en ce qu'une partie de la boue pauvre en phosphates résultant de la séparation des phosphates est amenée au courant partiel sortant du bassin d'activation et est mélangée à celui-ci avant la séparation des phosphates.

6. Procédé selon l'une des revendications 1 à 5, caractérisé en ce que le traitement aérobie est effectué dans le bassin d'activation dans au moins deux zones de traitement, en ce qu'un courant partiel de l'eau résiduaire alimentée est amené à au moins une autre zone de traitement, en ce que la boue recyclée est de préférence amenée à la première zone de traitement, en ce que le traitement aérobie de l'eau résiduaire et de la boue de retour est exécuté dans la première zone de traitement pendant un temps qui permet que la majeure partie des phosphates existant dans l'eau résiduaire soit collectée par les micro-organismes, en ce qu'un courant partiel du mélange eau résiduaire/boue activée est amenée de la première zone de traitement à la deuxième zone de traitement et en ce qu'un autre courant partiel est soumis à une séparation des phosphates, en ce que la boue pauvre en phosphates résultant de la séparation des phosphates est amenée au moins en partie à la première zone de traitement, et en ce que le liquide résultant enrichi en phosphates est traité ultérieurement.

7. Dispositif pour la mise en œuvre du procédé selon l'une des revendications 1 à 6, avec un bassin d'activation et un dispositif de postsédimentation raccordé à celui-ci par une sortie et comportant une canalisation de retour de boues vers le bassin d'activation, caractérisé en ce qu'un dispositif de séparation des phosphates (10) est raccordé à la sortie (3) du bassin d'activation (2) par une canalisation de dérivation (9, 9'), ce dispositif (10) comportant une canalisation de retour de boues (13) vers le bassin d'activation (2) et une sortie (11) pour le liquide enrichi en phosphates.

8. Dispositif selon la revendication 7, caractérisé en ce que dans la sortie (11) pour le liquide enrichi en phosphates est prévu un dispositif (12) pour la précipitation des phosphates.

9. Dispositif selon l'une des revendications 7 ou 8, caractérisé en ce que la sortie du dispositif (12) pour la séparation des phosphates est raccordée au bassin d'activation.

10. Dispositif selon les revendications 7 à 9, caractérisé en ce que le dispositif de séparation des phosphates (10) est associé à un réacteur à agitation (14).

11. Dispositif selon la revendication 10, caractérisé en ce que le réacteur à agitation (14) est relié par une dérivation (16) à la canalisation de retour de boues (13) allant du dispositif séparateur des phosphates (10) au bassin d'activation (2).

12. Dispositif selon l'une des revendications 7 à 11, caractérisé en ce que le bassin d'activation (2) est partagé en au moins deux zones de traitement aérobie (2a, 2b), en ce que l'alimentation (1) allant à la première zone de traitement (2a) comporte une dérivation (18) vers au moins une autre zone de traitement (2b), en ce que la canalisation de retour de boues (6) est raccordée à la première zone de traitement (2a), en ce que la première zone de traitement (2a) est raccordée par une sortie (19) à un dispositif de séparation des phosphates (10), en ce qu'au dispositif de séparation des phosphates (10) sont raccordées une sortie (11) pour le liquide enrichi en phosphates et une sortie de boues (13), et en ce que la sortie de boues (13) est reliée à la première zone de traitement (2a).

Fig.1

*Fig. 2*